# EUROPEAN PATENT APPLICATION

(11) **EP 4 848 483 A1**
(43) Date of publication of application: **02.12.2026**
(21) Application number: 25305768.1
(22) Date of filing: 28.05.2025
(51) Int. Cl.: H01R 4/30, F16B 31/02, H01R 4/36, H01R 4/2483

(54) **CABLE CONNECTION ASSEMBLY**

(71) Applicant: TE Connectivity Solutions GmbH, 8200 Schaffhausen (CH)
(72) Inventor: PELTIER, Bruno, 21220 Gevrey-Chambertin (FR); MILLOT, Benoit, 21220 Gevrey-Chambertin (FR); PETRIGNET, Laurent, 21220 Gevrey-Chambertin (FR)
(74) Representative: Grünecker Patent- und Rechtsanwälte PartG mbB

(57) **Abstract**

The present invention relates to a cable connection assembly (10, 50), such as a splice connector or lug, for connecting a power cable or an electrical cable, the cable connection assembly (10, 50) comprising: at least two binding screws (28), each binding screw having a conical tip (30) configured to penetrate the cable, a connector body (12) extending along a longitudinal direction (L) and at least partially forming a cable receiving chamber (14), the connector body (12) comprises two or more threaded holes (26) for receiving a respective binding screw (28), wherein at least two of the threaded holes (26) are arranged in a same transversal plane (100, 200, 300, 400), the transversal plane (100, 200, 300, 400) being perpendicular to the longitudinal direction (L).

## Description

### Field of Invention

The present invention relates to a cable connection assembly, such as a splice connector or a lug, especially for connecting power cables or electrical cables. Cable connection assemblies may be used for splicing or connecting e.g. stranded wires in power distribution networks or long distance transmission systems for distributing electrical power.

The present invention is particularly adapted for high voltage applications, including those above 250,000 volts (250 kV).

### Background of the invention

A typical cable connection assembly consists of a connector body that provides at least one receiving chamber into which a cable or its stranded end section can be inserted. A binding screw is then inserted into a threaded hole accessible from the exterior of the connector body. This threaded hole extends essentially perpendicular to the inserted cable. When the screw is tightened, it advances through the threaded hole into the receiving chamber, compressing the cable between the screw and the chamber walls. It allows securing the cable mechanically and establishing an electrical connection between the screw, the inner chamber walls, and the cable itself.

For high voltage applications, such as those above 250,000 volts (250 kV), it is important to ensure the centering of the cable within the receiving chamber because any decentering can lead to unwanted electric field effects at such high voltages. In particular, a decentering that might be acceptable for low voltage, typically below 1,000 volts (1 kV), or average voltage, typically between 1,000 volts (1 kV) and 52,000 volts (52 kV), would not be suitable for high voltage. To prevent decentering, it is known to use a plurality of screws offset with respect to each other along a longitudinal direction of the connector, in particular arranged in a spiral manner.

In addition, it requires adapting the inner diameter of the receiving chamber to the external diameter of the cable to reduce the gap between them and thus minimize decentering. However, this adjusted fit can make it more difficult to insert the cable into the receiving chamber. Moreover, this adjusted fit restricts the connector to specific cable sizes, reducing its versatility for different cable diameters.

The object of the invention is to provide a cable connection assembly adapted for high voltage applications that prevents decentering while allowing the reception of a range of different cable diameters within the chamber.

### Description of the Invention

The object of the invention is achieved by means of a cable connection assembly according to the independent claim 1. The cable connection assembly, such as a splice connector or lug, for connecting a power cable or an electrical cable, comprises: at least two binding screws, each binding screw having a conical tip configured to penetrate the cable, a connector body extending along a longitudinal direction and at least partially forming a cable receiving chamber, the connector body comprises two or more threaded holes for receiving a respective binding screw, wherein at least two of the threaded holes are arranged in a same transversal plane, the transversal plane being perpendicular to the longitudinal direction.

This assembly allows that the at least two binding screws can be tightened in a manner that keeps the cable centered within the connector body. It provides a reliable and stable electrical connection, particularly for high voltage applications.

The use of at least two binding screws with conical tips configured to penetrate the cable in a same transversal plane allows for an increased diameter of the cable upon penetration, causing the cable to expand in diameter upon penetration. This expansion helps to center the cable within the cable receiving chamber. As the conical tips penetrate the cable, the cable is pushed against the inner walls of the cable receiving chamber, improving the electrical contact along the inner surface of the cable receiving chamber. The arrangement of at least two threaded holes in the same transversal plane perpendicular to the longitudinal direction provides a balanced distribution of pressure around the cable, further enhancing the centering effect. This centering and contact help preventing decentering that could lead to unwanted electric field effects, especially for high voltage applications.

The conical tip of the binding screw may be configured to establish an electrical contact with the cable by penetrating into it. The conical shape enhances the compression of the cable, thereby improving both the mechanical fastening and the electrical connection between the cable and the connector body. The binding screw may be integrally formed in one-piece.

The connector body is electrically conductive. The connector body may be made of metal. The connector body may integrally formed in one-piece. The connector body may be manufactured by extrusion. Extrusion is a manufacturing process that allows forming profiles of constant transversal cross-section. The profiles may be obtained by means of a die opening, through which a metal material is pushed therethrought.

The connector body may define a splice connector. The splice connector may be configured to mechanically and electrically connect two distinct cable ends, in particular in axial continuity along the longitudinal direction. The splice connector may be configured to receive each cable end in the cable receiving chamber from opposite directions along the longitudinal direction.

The connector body may alternatively define a lug. The lug may be configured to connect a cable to an electrical terminal or a conductive surface. The lug may comprise a single opening into the cable receiving chamber for receiving the cable and a closed end opposite the single opening. The closed end may form part of a mounting interface, such as a flat contact surface or a bore for receiving a fastening element, for instance allowing the lug to be secured to an eletrical terminal. The cable may be inserted along the longitudinal direction and pressed against the internal surface of the closed end by means of the at least two binding screws.

According to one embodiment, the connector body may comprise a plurality of transversal planes, each having at least two threaded holes, and the threaded holes in each transversal plane may be offset from the threaded holes in adjacent transversal planes along the longitudinal direction. This staggered arrangement helps progressively compress and center the cable inside the connector body. As each binding screw penetrates and expands the cable from a different angle or position along the length of the cable, it improves overall centering and grip stability.

According to one embodiment, the connector body may comprise at least three distinct transversal planes spaced along the longitudinal direction, in particular wherein each plane comprises at least two threaded holes. The presence of multiple transversal planes provides a more secure and stable connection over a longer section of the cable, reducing the risk of decentering.

According to one embodiment, the connector body may comprise two threaded holes in the same transversal plane, diametrically opposed to each other. Having two diametrically opposed threaded holes in the same transversal plane allows binding screws to apply balanced, opposing forces on the cable. When the binding screws are tightened, they press against opposite sides of the cable, which enhances the centering of the cable within the connector body. This symmetric compression reduces the risk of misalignment or uneven pressure, improving the mechanical stability and the electrical contact quality of the connection.

According to one embodiment, the connector body may comprise at least three threaded holes arranged in the same transversal plane. The use of at least three threaded holes in the same plane enables the cable to be secured from multiple angles around its circumference. It provides additional points of pressure, which allows for more uniform and stable centering of the cable within the connector body.

According to one embodiment, the three or more threaded holes may be radially arranged at equal distances from each other in the same transversal plane. This radial arrangement provides an even distribution of pressure around the cable. The uniform radial pressure around the cable allows for improved stability and centering.

According to one embodiment, at least one the binding screws may be a shearable screw. The shearable screw may have a shear-off head that detaches when a shear off torque is reached. This prevents any portion of the binding screw from protruding outside the connector body. Hence, the shearable binding screw prevents the accumulation of electrical charge at sharp points by eliminating protrusions that could cause edge effect. The shear off torque may range between 10 Nm to 120 Nm, in particular between 40 Nm to 100 Nm. The shear off torque may vary according to the type and size of the binding screw.

According to one embodiment, the conical tip of each binding screw may have an arched profile in a cross-section comprising the rotation axis of the binding screw. The arched profile of the conical screw tip enables deeper and easier penetration into stranded conductors of the cable compared to a straight-cone design. This enhances the compression of the stranded conductors within the connector body. The increased compression contributes to better electrical contact and centering.

According to one embodiment, the connector body may be essentially cylindrical. A cylindrical connector body avoids sharp edges, reducing localized electric field concentrations, which is particularly adapted for high-voltage applications.

According to one embodiment, the cable receiving chamber may have a circular cross-section along the longitudinal direction. A circular cross-section provides uniform surface contact around the entire circumference of the cable, enhancing mechanical stability and electrical contact continuity. It also facilitates consistent compression by means of the binding screws.

According to one embodiment, the inner diameter of the cable receiving chamber may be comprised between 10 millimeters and 100 millimeters. This inner diameter range ensures compatibility with a variety of cable sizes while maintaining centering, thanks to the compression provided by the binding screws. This allows the same connector body to accommodate cables with different diameters

According to one embodiment, at least one the binding screws may be provided with a visual marker configured to indicate an angular and/or translational position of the binding screw in the corresponding threaded hole with respect to the connector body. The visual marker may allow improving the angular and/or translational positioning feedback for an installer during the tightening process. By enabling visual identification of angular and/or translational positions of the binding screws, the visual marker may help the installer follow a defined tightening sequence, for instance in successive and alternating angular increments. This may assist in limiting angular errors from one tightening step to the next, particularly when the tightening is resumed after interruption.

The configuration in which at least two of the threaded holes are arranged in a same transversal plane perpendicular to the longitudinal direction, allows the corresponding binding screws to exert pressure on the cable from opposite or angularly spaced positions within a common transversal plane. When these binding screws are tightened in an alternating manner and by specific increments, in particular by means of the visual markers, it may contribute to a more balanced application of force on the cable. As a result, the cable may be maintained more centrally within the cable receiving chamber during the tightening process. The use of incremental and alternating tightening may help reduce asymmetric deformation of the cable and improve positioning accuracy, in particular before each binding screw reaches its final tightening position.

Hence, especially when the cable connection assembly comprises multiple binding screws, the use of visual markers may contribute to a more balanced tightening process around the circumference of the cable, which may favour centering of the cable in the receiving chamber of the connector body. Such centering may be particularly advantageous in high-voltage applications where the symmetry of the assembly can affect the distribution of electric fields within the connector body.According to one embodiment, the visual marker may comprise at least one of a groove, a recess, a notch, a sticker or a color marking. In particular, the visual marker may comprise a combination of at least two of the following: a groove, a recess, a notch, a sticker or a color marking. These features may be provided on a non-threaded portion of the binding screw and may be dimensioned or arranged to be externally visible during installation. Such visual markers may assist the installer in identifying angular and/or translational positions of the binding screw relative to the connector body, in particular when the screw shall be tightened incrementally.

The groove, recess or notch may be formed directly in the surface of the non-threaded portion of the binding screw, for example by machining or deformation. The visual marker may be formed by engraving. The visual marker may be formed by means of a laser. The visual marker may extend axially, radially or helically with respect to a rotation axis of the binding screw.

According to one embodiment, the visual marker may be in the form of a removable sticker applied to the non-threaded portion of the binding screw. The sticker may serve as a temporary angular reference during tightening. The sticker may be removed after the installation is complete. In case the binding screw is re-usable, a new sticker may be applied and positioned to define a different angular reference, depending on the required tightening sequence.

The visual marker may optionally be colour-coded to correspond to specific angular increments or to distinguish between multiple binding screws in the multi-screw assembly. The colour marking may provide a better visual contrast to improve readability for an installer. The colour marking may be applied by printing, coating, labelling, painting, or any other surface application technique.

In one embodiment, the visual marker may comprise multiple marking elements arranged in a pattern, such as a series of lines or symbols spaced around the circumference of the non-threaded portion. The visual marker may form a graduated scale.

According to one embodiment, the visual marker may be realized as a material contrast. For example, the visual marked may be defined by a region of the non-threaded portion having a different surface roughness, gloss, reflectivity, or texture than the rest of the non-threaded portion. This may allow the visual marker to remain identifiable under variable lighting conditions.

According to one embodiment, the binding screw may comprise an audible feedback element, such as a click mechanism, configured to emit a sound during tightening at a predefined angular position. In a variant, the visual marker itself may be configured to produce an audible feedback, for example through interaction with a feature on the connector body.

According to one embodiment, the binding screw may comprise a tactile feedback feature, such as a notch or a local resistance, which can be perceived by touch by an installer during tightening. According to one embodiment, the binding screw may comprise a mechanical stop, for example a notched feature or an axial shoulder, configured to limit further rotation of the binding screw beyond a defined position.

Each of the audible feedback element, tactile feedback feature, and mechanical stop may be provided in addition to the visual marker and act as a distinct marker to assist the installer during tightening. The visual marker and at least one other type of marker (audible or tactile) may indicate different angular positions. Alternatively, at least two types of markers may provide indications for the same angular position. This may further improve the feedback available to the installer during the tightening process.

According to one embodiment, the connector body may comprise at least one visual reference marker arranged to be aligned with the visual marker of the binding screw when the binding screw reaches a defined angular position during tightening. This may improve the precision of angular positioning, since the visual marker of the binding screw can be aligned with a specifically and fixedly defined reference on the connector body.

The object of the invention is also achieved by a method for connecting a cable connection assembly to a power cable or an electrical cable, wherein the cable connection assembly comprises: a connector body extending along a longitudinal direction and at least partially forming a cable receiving chamber, at least two binding screws, each binding screw having a conical tip configured to penetrate the cable, the connector body comprises two or more threaded holes for receiving a respective binding screw, wherein at least two of the threaded holes are arranged in a same transversal plane, the transversal plane being perpendicular to the longitudinal direction. The method comprises the steps of: inserting the cable along the longitudinal direction into the cable receiving chamber, screwing each binding screw into the corresponding threaded hole so that each conical tip penetrates the cable, and continuing to screw each binding screw until a predefined shear-off torque is reached, causing respective a shear-off portion of the binding screw to detach.

The cable expands in diameter as the conical tips of the binding screws penetrate it. This expansion centers the cable within the cable receiving chamber, providing uniform contact along the inner walls of the cable receiving chamber.

According to one embodiment, the binding screws may be tightened in successive sequences, each sequence comprising a rotation of the respective binding screw by a defined angle. In particular, each sequence may comprise a rotation of less than 360 degrees.For example, each sequence may comprise a rotation of 180 degrees. This sequential tightening balances the compression of the cable step by step, which helps better centering of the cable within the cable receiving chamber. Alternatively, each sequence may comprise a tightening equal to or greater than one full turn. For instance, each sequence may comprise a tightening of two full turns or more. Such longer rotations may reduce the number of tightening steps required and facilitate quicker compression of the cable, while still achieved progressive compression of the cable.

The invention will be described in more detail by way of examples hereinafter using advantageous embodiments and with reference to the accompanying drawings. The described embodiments are only possible configurations in which individual features may, however, as described above, be implemented independently of each other or may be omitted. Equal elements illustrated in the drawings are commonly provided with same reference signs.

In the drawings:
Figure 1 shows a perspective view of a cable connection assembly according to a first embodiment;
Figure 2 shows a cut-view of the cable connection assembly of Figure 1;
Figure 3 shows a perspective view of a cable connection assembly according to a second embodiment and a cable;
Figure 4 and Figure 5 show cut-views of the cable connection assembly of Figure 3.

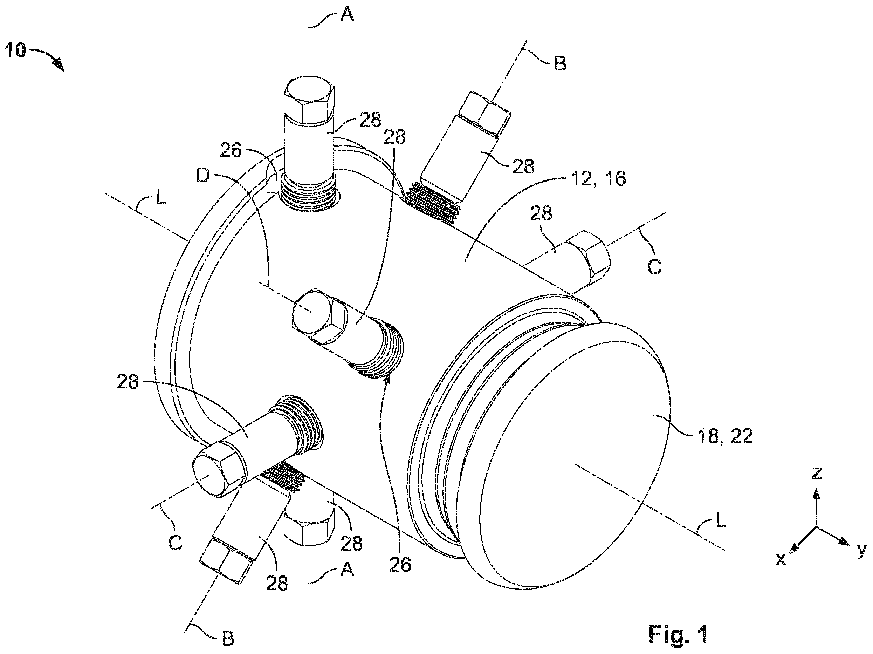

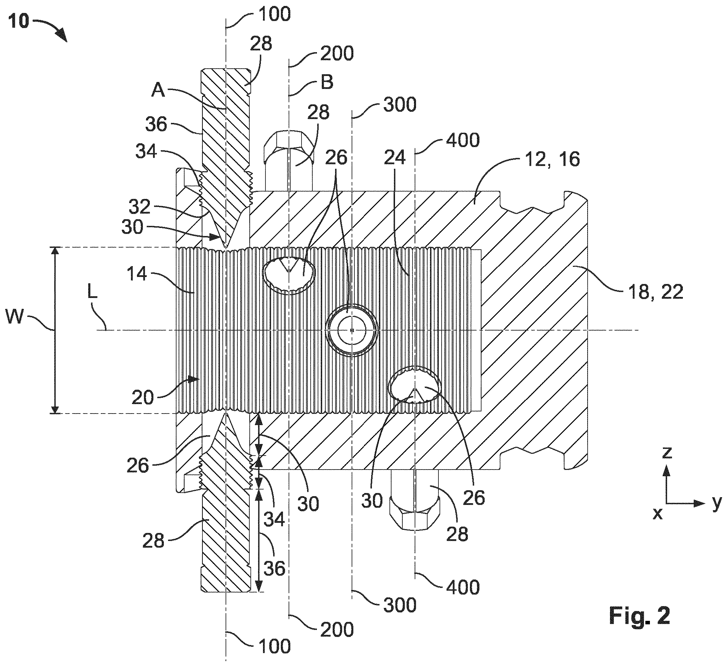

Fig. 1 and Fig. 2 illustrate a cable connection assembly 10 according to a first embodiment. The cable connection assembly 10 comprises a connector body 12 for connecting a power cable or an electrical cable (not represented). The connector body 12 extends along a longitudinal direction L. The connector body 12 defines a cable receiving chamber 14, visible in the cut-view of Fig. 2. In the first embodiment, the connector body 12 is a cable lug 16. Accordingly, the connector body 12 is provided with one single opening 20 that provides access to the cable receiving chamber 14. The end 18 of the cable lug 16 opposite to the opening 20 along the longitudinal direction L is closed by a wall 22. Hence, a cable (not represented) can only be inserted into the cable receiving chamber 14 through the opening 20.

In an alternative embodiment (not shown), the connector body 12 may be formed as a splice connector, in which the cable receiving chamber 14 is open at both ends 18, 20 along the longitudinal direction L. Hence, in this alternative embodiment, the connector body 12 comprises two opposite openings along the longitudinal direction L, enabling cable insertion from either side.

The connector body 12 has a substantially overall cylindrical shape. The cable receiving chamber 14 has a circular cross-section along the longitudinal direction L. The cable receiving chamber 14 has an inner diameter defined by the letter W in Fig. 2.

An inner wall 24 of the cable receiving chamber 14 is threaded or serrated, as shown in Fig. 2. A threaded, serrated or textured wall may improve the grip and the contact with the cable (not represented).

In an alternative, the internal wall 24, or at least a portion of the internal wall 24, may instead have a smooth surface.

The connector body 12 comprises a plurality of threaded holes 26. Each threaded hole 26 is configured to receive a binding screw 28.

In the first embodiment, the connector body 12 comprises eight threaded holes 26. The threaded holes 26 are arranged in four distinct transversal planes 100, 200, 300, 400 spaced along the longitudinal direction L. The four distinct transversal planes 100, 200, 300, 400 are parallel to each other. The four distinct transversal planes 100, 200, 300, 400 are each defined in a plane (XZ), which is transverse to the axis Y. The axis Y corresponds to the longitudinal direction L. Each transversal plane 100, 200, 300, 400 includes two threaded holes 26, in particular positioned diametrically opposite one another. In the first transversal plane 100, two threaded holes 26 are aligned along an axis A. In the second transversal plane 200, two threaded holes 26 are aligned along an axis B. In the third transversal plane 300, two threaded holes 26 are aligned along an axis C. In the fourth transversal plane 400, two threaded holes 26 are aligned along an axis D. In the first embodiment, none of the axes A, B, C and D are parallel to one another. The threaded holes 26 in each transversal plane 100, 200, 300, 400 are thus offset from the threaded holes 26 in adjacent transversal planes 100, 200, 300, 400 along the longitudinal direction L, as illustrated in Fig. 1 and Fig. 2.

The binding screw 28 may be adapted to achieve the desired contacting effect with a cable. Each binding screw 28 respectively has a conical tip 30, as shown in the cut view of Fig. 2. The conical portion tip 30 may be adapted for the desired penetration depth inside the cable receiving chamber 24. In the first embodiment, the conical tip 30 of the binding screw 28 has an arched profile 32 in a cross-section comprising the axis A (respectively B, C, D) of the threaded hole 26 in the transversal plane 100 (respectively 200, 300, 400). The axis A, B, C or D of each threaded hole 26 corresponds to the rotation axis A, B, C or D of the binding screw 28 received in their corresponding threaded hole 26. The arched profile 32 of the conical tip 30 enables deeper and easier penetration into the cable compared to a straight-cone design. This enhances the compression of the cable within the connector body 12. The increased compression contributes to better electrical contact and centering.

Each binding screw 28 further comprises a threaded portion 34 that is positioned between the conical tip 30 and a shear-off portion 36. The shear-off portion 36 may be detached from the threaded portion 34 upon reaching a predefined shear-off torque. As a result, the binding screw 28 is configured such that only the threaded portion 34 and the conical tip 30 remain in the connector body 12, preventing any part of the screw from protruding outside the connector body 12.

The binding screw 28 is integrally formed in one-piece. The conical tip 30 is rigidly fixed to the threaded portion 34.

In the state depicted in Fig. 1 and Fig. 2, the binding screws 28 are pre-assembled to the connector body 12. The binding screws 28 are partially screwed into their respective threaded holes 26. The threaded portion 34 of each binding screw 28 is only partially threaded inside the threaded hole 26, such that the conical tip 30 only extends inside the threaded hole 26 and does not protrude into the cable receiving chamber 14. This pre-assembled position allows for transportation and storage of the cable connection assembly 10 without the risk of losing the binding screws 28. Moreover, it facilitates the introduction of a cable into the cable receiving chamber 14 without being disturbed by any protruding part of the conical tip 30 of the binding screws 28.

Once a cable (not represented) has been inserted through the opening 20 of the connector body 12 into the cable receiving chamber 14, each binding screw 28 can be further screwed into their corresponding threaded hole 26. It is advantageous to tighten the binding screws 28 in successive sequences, in particular with each sequence comprising a tightening of 180°. This sequential tightening helps balance the compression step by step, promoting better centering of the cable within the receiving chamber 14.

By screwing each binding screw 28, its conical tip 30 will penetrate the cable. As the conical tip 30 penetrates the cable, it will cause the expansion of the cable inside the cable receiving chamber 14. This expansion results in the cable being in surface contact with the inner wall 24 of the cable receiving chamber 14, improving centering the cable within the cable receiving chamber 14.

Continuing to screw each binding screw 28 until their predefined shear-off torque is reached will cause the shear-off portion 34 of each binding screw 28 to detach. This ensures that only the threaded portion 32 and conical tip 30 remain within the threaded hole 26, preventing any part of the binding screw 28 from protruding outside the connector body 12.

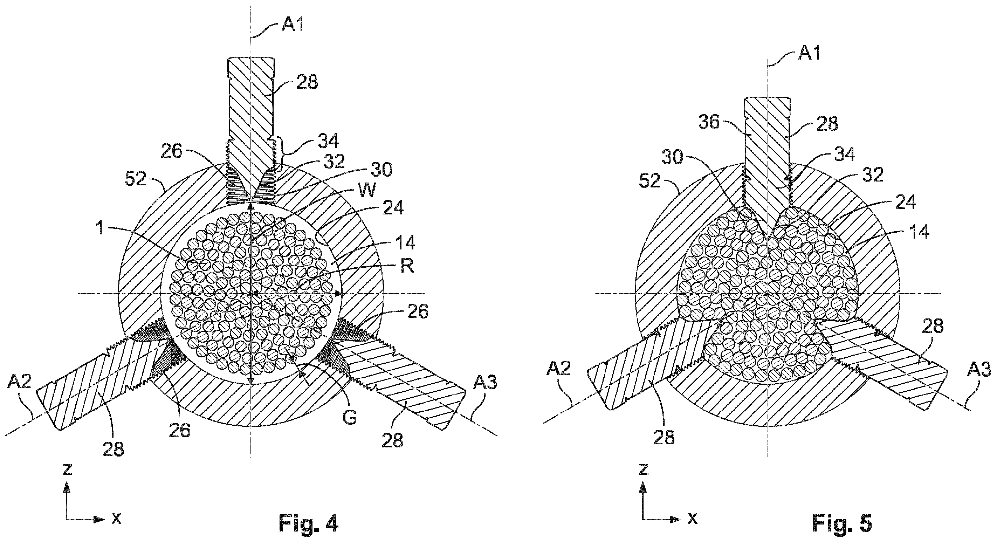

This aspect will be further explained in view of the cut views of Figures 4 and 5.

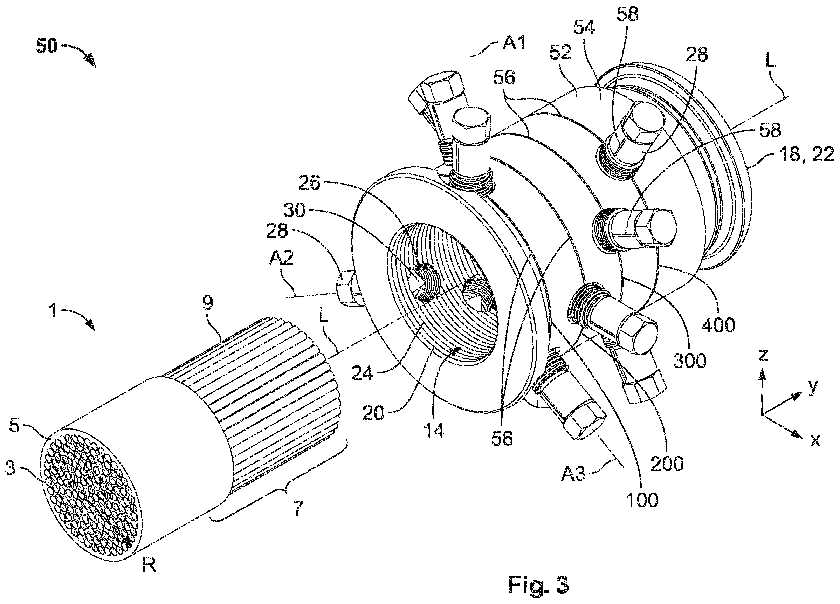

Fig. 3, Fig. 4 and Fig. 5 illustrate a cable connection assembly 50 according to a second embodiment and a cable 1. Elements with the same reference numeral already described and illustrated in the preceding figures will not be described in detail again but reference is made to their description above.

In the example of the second embodiment, the electrical cable 1 is a high-voltage power transmission cable 1. The electrical cable 1 is a round cable and comprises a plurality of strand conductors 3, forming the core of the electrical cable 1, surrounded by an electrically insulating layer 5. The section 7 of the electrical cable 1 adapted to be inserted in the connector body 12 is a stripped portion 9 from which the electrically insulating layer 5 has been removed so as to directly exposed the strand conductors 3. The core of the electrical cable 1 has a radius R. The radius R may be comprised between 5 millimeters and 50 millimeters, in particular between 5 millimeters and 25 millimeters.

The cable connection assembly 50 according to the second embodiment comprises a connector body 52, forming a cable lug, like in the first embodiment.

The difference between the cable connection assembly 50 according to the second embodiment and the cable connection assembly 10 according to the first embodiment is that the connector body 52 in the second embodiment comprises three threaded holes 26 per transversal plane 100, 200, 300, 400 instead of only two in the first embodiment.

As better visible in the first transversal plane 100 (defined by the plane XZ), which is the transversal plane closest to the opening 20 of the connector body 52 in Fig. 3 and the one illustrated in Fig. 4 and Fig. 5, the three threaded holes 26 and the corresponding binding screws 28 are radially spaced at equal distances from each other. The three threaded holes 26 and the corresponding binding screws 28 extend respectively along axes A1, A2, A3. Each axes A1, A2, A3 is spaced from one another by 120 degrees in the first transversal plane 100 (defined by the plane XZ). This arrangement applies for the three threaded holes 26 and corresponding binding screws 28 in each of the other transversal planes 200, 300, 400.

In a second embodiment, the angular positions of the threaded holes 26 in each transversal plane 100, 200, 300, 400 are offset relative to those in the adjacent transversal planes 100, 200, 300, 400. This staggered configuration enhances cable compression and centering by distributing the pressure points along different rotational positions of the cable circumference along the longitudinal direction L.

In the example of the second embodiment depicted by Fig. 3, each binding screws 28 and the connector body 52 are respectively provided with a visual marker. In particular, Fig. 3 shows that an outer wall 54 of the connector body 52 is provided with circumferential marking line 56. Each marking line 56 is positioned around the outer wall 54 and is aligned with one of the transversal planes 100, 200, 300, 400. The threaded holes 26 are positioned in a way that they intercept respective marking lines 56. These marking lines 56 serve as visual markers for visual indications for an installer when tightening the binding screws 28. To this effect, the binding screws 28 are also provided with reference lines 58 that extend along the rotation axis of the binding screws 28. The reference lines 58 define the visual marker of each binding screw 28. The reference lines 58 on the binding screws 28 can be aligned with the marking lines 56 on the connector body 52 to indicate a tightening of 180 degrees, which corresponds to half a turn of the binding screws 28. This marking system is not limitative and might also be added to the first embodiment and might also be omitted in configurations with three threaded holes per plane, as shown in Fig. 3.

Fig. 4 shows the first transversal plane 100 of the connector body 52 according to the second embodiment in a state where the binding screws 28 are pre-assembled to the connector body 52 but not tightened enough for the conical tips 30 to penetrate into the cable receiving chamber 14. This allows the cable 1, particularly the section 7 of the cable 1, to be inserted into the cable receiving chamber 14. The radius R of the electrical cable 1 is smaller than the inner radius (W/2) of the cable receiving chamber 14, creating a gap G between at least a portion of the cable 1 and the inner wall 24 of the cable receiving chamber 14.

Fig. 5 shows the same first transversal plane 100 but in a state where the three binding screws 28 have been tightened. Each binding screw 28 is rotated along their corresponding axes A1, A2, A3. This rotation causes the binding screws 28 to deepen towards the cable receiving chamber 14. By doing so, the conical tips 30 penetrate into the cable 1. Further screwing causes the conical tips 30 to penetrate deeper into the cable 1, in particular until a predefined torque is reached. This penetration compacts the strand conductors 3 of the cable 1 around each conical tip 30 and extends toward the arched profile 32, generating increasing resistance as the predefined torque is approached.

The penetration of the conical tips 30 into the cable 1 causes the cable 1 to expand, as the conical tips 30 displace a volume that cannot be occupied anymore by the cable 1. The cable 1 thus deforms and expands inside the cable receiving chamber 14. This expansion results in the cable 1 being pushed against the inner wall 24 of the cable receiving chamber 14.

The tightening process may be done by successive and alternating tightening of the binding screws 28, typically in sequences of 180° thanks to the system of marking lines 54 and reference lines 58. The marking lines 54 on the outer wall 54 of the connector body 52 and the corresponding reference lines 58 on the binding screws 28 provide visual indications for the installer. By aligning the reference lines 58 on the binding screws 28 with the marking line 54 on the connector body 52, the installer can more easily tighten the binding screws sequentially by half turns. The resulting effect is a more uniform tightening, and thus, a better centering of the cable 1 within the cable receiving chamber 14.

As explained with respect to the first embodiment, the shear-off portion 34 of each binding screws 28 may then be detached, when their respective predefined shear-off torque is reached.

Each of the cable connection assemblies 10, 50 may be used for connecting different diameters of cables. Each cable connection assembly 10, 50 is particularly suitable for connection with a high-voltage power transmission cable 1, but may be adapted to different type of electrical cables.

An electrical cable may comprise one or more solid conductors. Alternatively or in combination, the electrical cable may comprise one or more stranded conductors. A transversal cross-section of the electrical cable may have a circular, an oval or a shape intermediate between a circular and an oval shape. In particular, the electrical cable may be a round cable. A transversal cross-section of around cable is circular. The electrical cable may be a sector cable. The sector cable may comprise a plurality of conductors, each conductor forming a section of a circle in a transversal cross-section of the electrical cable. The cable connection assembly 10, 50 may be used for connecting any kind of cable or wire, e.g. copper wires, aluminum wires, wires made of any kind of metal or metal alloys, etc. and are especially advantageous for use with aluminum wires.

In alternative embodiments that are not represented, the cable connection assembly may comprise fewer than four transversal planes 100, 200, 300, 400. Alternatively, the cable connection assembly may comprise more than four transversal planes 100, 200, 300, 400. Each transversal plane may have a different number of threaded holes 26, provided that each plane has at least two threaded holes 26.

Each transversal plane may also have more than three threaded holes 26. The number of threaded holes 26 in each plane may vary, in particular as long as it does not prevent the tightening of the binding screws 28 relative to one another.

The distance between two successive transversal planes along the longitudinal direction may vary, in particular as long as it does not prevent the tightening of the binding screws 28 relative to one another.

The flexibility in the number and arrangement of threaded holes 26 in each transversal plane allows the cable connection assembly to be adapted to various cable sizes and configurations.

### Reference signs

1 electrical cable
3 strand conductors
5 electrically insulating layer
7 section of the electrical cable
9 stripped portion of the electrical cable
10 cable connection assembly (first embodiment)
12 connector body (first embodiment)
14 cable receiving chamber
16 cable lug
18 end of the cable lug
20 opening
22 wall closing the end of the cable lug
24 inner wall of the cable receiving chamber
26 threaded holes
28 binding screws
30 conical tip of binding screws
32 arched profile of conical tip
34 threaded portion of binding screws
36 shear-off portion of binding screws
50 cable connection assembly (second embodiment)
52 connector body (second embodiment)
54 outer wall
56 circumferential marking line
58 reference lines on binding screws
100, 200, 300, 400 transversal planes
A, A1, A2, A3, B, C, D axis of threaded hole and binding screws L longitudinal direction
G gap between the cable and the inner wall of the cable receiving chamber
R radius cable
W inner diameter of the cable receiving chamber
X transverse direction
Y longitudinal direction
Z height direction

## Claims

1. A cable connection assembly (10, 50), such as a splice connector or lug, for connecting a power cable or an electrical cable, the cable connection assembly (10, 50) comprising:
at least two binding screws (28), each binding screw having a conical tip (30) configured to penetrate the cable,
a connector body (12) extending along a longitudinal direction (L) and at least partially forming a cable receiving chamber (14),
the connector body (12) comprises two or more threaded holes (26) for receiving a respective binding screw (28),
wherein at least two of the threaded holes (26) are arranged in a same transversal plane (100, 200, 300, 400), the transversal plane (100, 200, 300, 400) being perpendicular to the longitudinal direction (L).

2. The cable connection assembly (10, 50) according to claim 1, wherein the connector body (12, 52) comprises a plurality of transversal planes (100, 200, 300, 400), each having at least two threaded holes (26), and the threaded holes (26) in each transversal plane (100, 200, 300, 400) are offset from the threaded holes (26) in adjacent transversal planes (100, 200, 300, 400) along the longitudinal direction (L).

3. The cable connection assembly (10, 50) according to claim 1 or 2, wherein the connector body (12, 52) comprises at least three distinct transversal planes (100, 200, 300, 400) spaced along the longitudinal direction (L).

4. The cable connection assembly (10) according to one of the preceding claims, wherein the connector body (12) comprises two threaded holes (26) in the same transversal plane (100, 200, 300, 400), diametrically opposed to each other.

5. The cable connection assembly (50) according to one of the claims 1 to 3, wherein the connector body (52) comprises at least three threaded holes (26) arranged in the same transversal plane (100, 200, 300, 400).

6. The cable connection assembly (50) according to the preceding claim, wherein the three or more threaded holes (26) are radially arranged at equal distances from each other in the same transversal plane (100, 200, 300, 400).

7. The cable connection assembly (10, 50) according to any of the preceding claims, wherein at least one the binding screws (28) is a shearable screw.

8. The cable connection assembly (10, 50) according to any of the preceding claims, wherein the conical tip (30) of each binding screw (28) has an arched profile (32) in a cross-section comprising the rotation axis of the binding screw (28).

9. The cable connection assembly (10, 50) according to any of the preceding claims, wherein the connector body (12) is essentially cylindrical.

10. The cable connection assembly (10, 50) according to any of the preceding claims, wherein the cable receiving chamber (14) has a circular cross-section along the longitudinal direction (L).

11. The cable connection assembly (10, 50) according to any of the preceding claims, wherein the inner diameter (W) of the cable receiving chamber (14) is comprised between 10 millimeters and 100 millimeters.

12. The cable connection assembly (10, 50) according to any of the preceding claims, wherein at least one the binding screws (28) is provided with a visual marker (58) configured to indicate an angular and/or translational position of the binding screw (28) in the corresponding threaded hole (26) with respect to the connector body (12).

13. The cable connection assembly (10, 50) according to claim 12, wherein the connector body (12) comprises at least one visual reference marker arranged to be aligned with the visual marker (58) of the binding screw (28) when the binding screw (28) reaches a defined angular position during tightening.

14. A method for connecting a cable connection assembly (10, 50) to a power cable or an electrical cable,
wherein the cable connection assembly (10, 50) comprises:
a connector body (12, 52) extending along a longitudinal direction (L) and at least partially forming a cable receiving chamber (14),
at least two binding screws (28), each binding screw (28) having a conical tip (30) configured to penetrate the cable,
the connector body (12, 52) comprises two or more threaded holes (26) for receiving a respective binding screw (28),
wherein at least two of the threaded holes (26) are arranged in a same transversal plane (100, 200, 300, 400), the transversal plane (100, 200, 300, 400) being perpendicular to the longitudinal direction (L),
the method comprising the steps of:
- inserting the cable along the longitudinal direction (L) into the cable receiving chamber (14),
- screwing each binding screw (28) into the corresponding threaded hole (26) so that each conical tip (30) penetrates the cable, and
- continuing to screw each binding screw (28) until a predefined shear-off torque is reached, causing respective a shear-off portion (36) of the binding screw (28) to detach.

15. The method according to claim 14, wherein the binding screws (28) are tightened in successive sequences, each sequence comprising a rotation of the respective binding screw (28) by a defined angle, in particular by an angle less than 360 degrees, more in particular by an angle of 180 degrees.
